# EUROPÄISCHE PATENTSCHRIFT

(11) **EP 4 367 403 B1**
(45) Veröffentlichungstag und Bekanntmachung des Hinweises auf die Patenterteilung: **06.08.2025**
(21) Anmeldenummer: 22733338.2
(22) Anmeldetag: 07.06.2022
(51) Int. Cl.: F04F 5/44, F04F 5/46, H01M 8/04, H01M 8/02

(54) **EINSPRITZMODUL FÜR EIN FÖRDERAGGREGAT EINES BRENNSTOFFZELLEN-SYSTEM**
INJECTOR MODULE FOR A DELIVERY UNIT OF A FUEL CELL SYSTEM
MODULE D'INJECTION POUR UNE UNITÉ DE TRANSPORT D'UN SYSTÈME DE PILE À COMBUSTIBLE

(30) Priorität: 09.07.2021 DE 102021207270
(43) Veröffentlichungstag der Anmeldung: 15.05.2024
(73) Patentinhaber: Robert Bosch GmbH, 70442 Stuttgart (DE)
(72) Erfinder: MAGEL, Hans-Christoph, 72764 Reutlingen (DE)
(86) Internationale Anmeldenummer: PCT/EP2022/065346
(87) Internationale Veröffentlichungsnummer: WO 2023/280492

(56) Entgegenhaltungen:
- EP-A1- 2 242 138
- DE-A1- 102014 225 274
- JP-A- 2006 252 863
- US-A1- 2017 244 116

## Beschreibung

### Technisches Gebiet

Die vorliegende Erfindung betrifft ein Einspritzmodul für ein Förderaggregat eines Brennstoffzellen-System zur Förderung und/oder Rezirkulation eines gasförmigen Mediums, insbesondere Wasserstoff.

### Stand der Technik

Brennstoffzellen kommen zunehmend als Energiewandler, unter anderem auch in Fahrzeugen, zum Einsatz, um in einem Brennstoff, wie z.B. Wasserstoff, gespeicherte chemische Energie zusammen mit Sauerstoff direkt in elektrische Energie umzuwandeln. Brennstoffzellen weisen typischerweise eine Anode, eine Kathode und eine zwischen Anode und Kathode angeordnete elektrolytische Membrane auf. An der Anode erfolgt eine Oxidation des Brennstoffs und an der Kathode eine Reduktion des Sauerstoffs. Dabei entsteht auf der Kathodenseite Wasser.

Typischerweise wird der Anode von Brennstoffzellen kontinuierlich gasförmiger Brennstoff im Überschuss zugeführt, das heißt, mehr Brennstoff, als bei einer gegebenen Zufuhrmenge an Sauerstoff an die Kathode stöchiometrisch notwendig wäre. Der Brennstoffüberschuss wird in der Regel rezirkuliert bzw. der Anode erneut zugeführt, insbesondere ein Einspritzmodul für ein Förderaggregat eines Brennstoffzellensystems.

Die DE 10 2014 225 274 A1 offenbart ein Einspritzmodul für ein Förderaggregat eines Brennstoffzellen-System zur Förderung und/oder Rezirkulation eines gasförmigen Mediums, insbesondere Wasserstoff, mit einem Dosierventil. Dabei weist das Einspritzmodul eine Verbindungsöffnung und/oder eine Einlassöffnung auf, mittels derer das gasförmigen Medium in das Einspritzmodul einströmt. Weiterhin weist das Einspritzmodul einen kleinen Düsenkörper mit einer ersten Treibdüse und einen großen Düsenkörper mit einer zweiten Treibdüse auf, mittels derer das gasförmige Medium aus dem Einspritzmodul ausströmt, wobei der kleine Düsenkörper in Richtung einer Längsachse beweglich im großen Düsenkörper und/oder im Einspritzmodul angeordnet ist. Der kleine Düsenkörper und der große Düsenkörper weisen dabei jeweils einen Gasflusspfad III, IV auf, wobei das gasförmige Medium entweder nur durch den ersten Gasflusspfad III oder durch den ersten Gasflusspfad III und den zweiten Gasflusspfad IV gleichzeitig strömen kann, wobei der zweite Gasflusspfad IV mittels einer Bewegung des kleinen Düsenkörpers öffenbar oder schließbar ist. Beide Treibdüsen sind zudem mit einem gemeinsamen Dosierventil angesteuert, wobei die zweite Treibdüse über ein federbelastetes Zuschaltventil zugeschaltet wird, das von der inneren Düse gebildet wird. Durch diese Anordnung erreicht man eine sehr einfache und kompakte Bauform einer Strahlpumpe mit zwei Düsen und gemeinsamen Dosierventil.

In der EP 2 242 138 A1 ist eine Ventileinheit zum Regulieren des Arbeitsflüssigkeitsflusses zwischen einer Arbeitskammer einer Flüssigkeitsbearbeitungsmaschine und sowohl einer ersten als auch einer zweiten Arbeitsflüssigkeitsleitung gezeigt.

Die JP 2006 252863 A offenbart eine Brennstoffzellen-Reaktionsgasversorgungsvorrichtung und Brennstoffzellensteuergerät einschließlich der Reaktionsgasversorgungsvorrichtung.

Aus der US 2017/244116 A1 ist ein Brenngaskreislaufapparat bekannt, mit einem Diffusor, der in einem Befestigungsloch eines Körpers untergebracht ist, wobei dem Diffusor durch einen Aufsatz ein Injektor vorgeschaltet werden kann.

Das aus der DE 10 2014 225 274 A1 bekannte Einspritzmodul für ein Förderaggregat kann gewisse Nachteile aufweisen.

Beim Öffnen des Dosierventils bildet sich Prinzip bedingt im Einspritzmodul ein abströmseitiger Strahlpumpendruck der zweiten Treibdüse aus. Dabei wirkt dieser Strahlpumpendruck der zweiten Treibdüse auf die Stirnflächen eines kleinen Düsenkörpers, wodurch das Zuschaltventil wieder geschlossen wird, insbesondere der Gasflusspfad IV. Somit ergibt sich keine stabile Zuschaltfunktion der zweiten Treibdüse.

### Offenbarung der Erfindung

Erfindungsgemäß wird ein Einspritzmodul für ein Förderaggregat eines Brennstoffzellen-System zur Förderung und/oder Rezirkulation eines gasförmigen Mediums, insbesondere Wasserstoff, vorgeschlagen. Dabei weist das Einspritzmodul eine Verbindungsöffnung und/oder eine Einlassöffnung auf, mittels derer das gasförmigen Medium in das Einspritzmodul einströmt, wobei das Einspritzmodul den kleinen Düsenkörper mit einer ersten Treibdüse und einen großen Düsenkörper mit einer zweiten Treibdüse aufweist, mittels derer das gasförmige Medium aus dem Einspritzmodul ausströmt. Des Weiteren ist der kleine Düsenkörper in Richtung einer Längsachse beweglich im großen Düsenkörper und/oder im Einspritzmodul angeordnet. Dabei weist der kleine Düsenkörper und der große Düsenkörpers jeweils einen Gasflusspfad III, IV auf, wobei das gasförmige Medium entweder nur durch den ersten Gasflusspfad III oder durch den ersten Gasflusspfad III und den zweiten Gasflusspfad IV gleichzeitig strömen kann, wobei der zweite Gasflusspfad IV mittels einer Bewegung des kleinen Düsenkörpers öffenbar oder schließbar ist

Bezugnehmend auf Anspruch 1 ist das Einspritzmodul derart ausgebildet, dass der kleine Düsenkörper mit einer Anschlagscheibe und/oder zumindest mittelbar mit dem großen Düsenkörper in Anlage steht und somit eine öffnende Druckfläche ausbildet, wobei die öffnende Druckfläche und eine, insbesondere abströmseitig am kleinen Düsenkörpers befindliche, schließende Druckfläche gleich groß sind, wobei die öffnende Schaltfläche mit einem zuströmseitiger Staudruck beaufschlagbar ist. Auf diese Weise kann der Vorteil erzielt werden, dass sich der kleine Düsenkörper nicht in Richtung der Längsachse derart zur Anschlagscheibe und/oder dem großen Düsenkörper bewegt und mit diesem in Anlage kommt, dass sich die Strömungsverbindung des zweiten Gasflusspfads IV schließt und somit nur noch der erste Gasflusspfad III mit dem gasförmigen Medium durchströmt wird. Beim Öffnen des Zuschaltventils mittels der Bewegung des kleinen Düsenkörpers bildet sich prinzipbedingt abströmseitig der Strahlpumpendruck der zweiten Treibdüse aus. Somit kann verhindert werden, dass der abströmseitige Strahlpumpendruck, der insbesondere auf die schließende Druckfläche des kleinen Düsenkörpers wirkt, zu einer schließenden Bewegung des kleinen Düsenkörpers führt, sondern es kann eine stabile Funktion eines solchen einfachen Aufbaus mit einer konzentrischen Doppeldüse erreicht werden, bei dem ein stabiles, druckgesteuertes Öffnen des Zuschaltventils erreicht wird und der zweite Gasflusspfad IV auch bei anstehendem Strahlpumpendruck stabil geöffnet bleibt, wodurch das Einspritzmodul den vom Betriebszustand einer Brennstoffzelle notwendigen Wasserstoff in der benötigten Menge zuverlässig liefern kann. Somit ist eine stabile Zuschaltfunktion der zweiten Düse gewährleistet und der Wirkungsgrad des gesamten Brennstoffzellen-Systems kann über verschiedene Betriebszustände erhöht werden.

Die Unteransprüche betreffen bevorzugte Weiterbildungen der Erfindung.

Gemäß einer vorteilhaften Ausgestaltung des Einspritzmoduls ist der kleine Düsenkörper in Richtung der Längsachse zumindest nahezu zylindrisch. Somit kann eine kompakte Bauform des Förderaggregats erzielt werden.

Gemäß einer besonders vorteilhaften Weiterbildung des Einspritzmoduls sind die Summe der abströmseitigen Stirnflächen und zuströmseitigen Stirnflächen des kleinen Düsenkörpers, ausgenommen die schließende Druckfläche und die öffnende Druckfläche, zumindest nahezu gleich groß. Auf diese Weise kann der Vorteil erzielt werden, dass sich bei einem Öffnen des Zuschaltventils mittels der Bewegung des kleinen Düsenkörpers und somit dem geöffneten zweiten Gasflusspfad IV dieser in einem stabilen Zustand gehalten werden kann, da die Summe der abströmseitigen und zuströmseitigen Stirnflächen zumindest nahezu gleich groß ist und somit bei einem zumindest annähernd gleichen Staudruck und Strahlpumpendruck ein Kräftegleichgewicht auf den kleinen Düsenkörper einstellt und dieser somit nicht in Richtung der Längsachse bewegt wird. Dies führt zu einem verbesserten Wirkungsgrad des Einspritzmoduls und/oder des Förderaggregats und/oder des gesamten Brennstoffzellen-Systems-Gemäß einer vorteilhaften Ausgestaltung des Einspritzmoduls weist der kleine Düsenkörper an seiner, der Längsachse abgewandten, Oberfläche mindestens ein scheibenförmiges Führungselement auf, mittels dessen der kleine Düsenkörper im großen Düsenkörper geführt ist, insbesondere orthogonal zur Längsachse. Auf diese Weise lässt sich zum einen eine schnelle und kostengünstige Montage realisieren, indem der jeweilige kleine Düsenkörper in den großen Düsenkörper einschiebbar ist, insbesondere in Richtung der Längsachse. Somit lassen sich die Gesamtkosten des Einspritzmoduls reduzieren. Zum anderen kann eine zuverlässige Führung des kleinen Düsenkörpers im großen Düsenkörpers erreicht werden, so dass ein zuverlässiges Öffnen des Zuschaltventils über die gesamte Lebensdauer des Einspritzmoduls erzielt werden kann. Auf diese Weise lässt sich die Zuverlässigkeit des gesamten Brennstoffzellen-Systems erhöhen.

Gemäß einer besonders vorteilhaften Weiterbildung des Einspritzmoduls weist das Einspritzmodul ein Federelement auf, wobei sich das Federelement insbesondere in Richtung der Längsachse zwischen dem großen Düsenkörper und dem kleinen Düsenkörper befindet, und wobei das Federelement den kleinen Düsenkörper durch eine Federkraft gegen die Anschlagscheibe und/oder mittelbar gegen den großen Düsenkörper drückt. Auf diese Weise lässt sich der Vorteil erzielen, dass ein Zurückbewegen des kleinen Düsenkörpers in eine Grundposition durch das Federelement bewirkt wird, sobald der zuströmseitige Staudruck ein gewisses Druckniveau unterschreitet, beispielsweise bei einem niedrigen Betriebszustand und/oder einer geringen Leistungsabgabe der Brennstoffzelle und/oder einem geschlossenen Dosierventil, wodurch der zweite Gasflusspfad IV geschlossen wird. Dadurch können die Bauteile eingespart werden, die benötigt werden, um den kleinen Düsenkörper in seine Grundposition an der Anschlagscheibe und/oder den großen Düsenkörper zurückzubewegen, wodurch die Komplexität des Einspritzmoduls verringert wird und somit Fertigungs- und Montage-kosten reduziert werden können.

Gemäß einer besonders vorteilhaften Weiterbildung steigt der Staudruck im Zwischenraum bei einem geöffneten Dosierventil kontinuirlich an, während insbesondere der Strahlpumpendruck stromabwärts des Zwischenraums zumindest nahezu gleich bleibt, bis ein Schaltdruckniveau erreicht wird, bei dem die auf die öffnende Druckfläche ausgeübte Druckkraft die Federkraft übersteigt und den kleinen Düsenkörper in Richtung der Längsachse derart wegbewegt, dass der Ventilssitz aufgehoben wird und sich ein zweiter Gasflusspfad IV öffnet. Auf diese Weise lässt sich der Vorteil erzielen, dass der kleine Düsenkörper nicht vom Strahlpumpendruck in einem Druckraum beeinflusst wird und ein stabiles Öffnungsverhalten aufweist. Dabei wird die Öffnungsfunktion des Zuschaltventils, bei der sich der zweite Strömungspfad zur Durchströmung öffnet, nicht vom Strahlpumpendruck und/oder Staudruck der zweiten Treibdüse abhängt. Somit ist eine stabile Zuschaltfunktion der zweiten Treibdüse gewährleistet. Dabei kann weiterhin eine kontinuierliche Anpassung der Dosiermenge zur Druckregelung im Anodensystem ermöglicht werden.

Gemäß einer vorteilhaften Ausgestaltung des Einspritzmoduls ist die Federkraft des Federelements, insbesondere bei einer Bewegung des kleinen Düsenkörpers nicht linear über den Weg bei einem Komprimieren oder Dekomprimieren des Federelements verläuft, sondern dass das Federelement eine über den Federweg progressiv veränderliche Federkonstante aufweist. Auf diese Weise lässt sich eine Bewegungsstrecke des kleinen Düsenkörpers abhängig von der Größe des Staudrucks einstellbar gestalten, so das eine maximale Öffnungsstrecke des kleinen Düsenkörpers erst bei einem größtmöglichen Staudruck erreicht wird. Somit kann das Einspritzmodul noch besser auf die Betriebszustände anpassbar gestaltet werden, wodurch sich der Vorteil erzielen lässt, dass der Wirkungsgrad des gesamten Förderaggregats und/oder des Brennstoffzellen-Systems verbessert werden kann.

Gemäß einer vorteilhaften Weiterbildung des Einspritzmoduls weist das Federelement eine progressiv veränderliche Federkonstante auf, die dadurch erzielt wird, dass der Windungsdurchmesser der Schließfeder veränderlich ist und/oder dass die Schließfeder aus mindestens zwei Federsegmenten aufgebaut ist, wobei die Federsegmente unterschiedliche Federkonstanten aufweisen. Auf diese Weise wird der Vorteil erzielt, dass eine kompakte Bauform des Einspritzmoduls erzielt werden kann.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

### Kurze Beschreibung der Zeichnung

Anhand der Zeichnung wird die Erfindung nachstehend eingehender beschrieben.

Es zeigt:
- Figur 1: eine schematische Schnittansicht eines Förderaggregats mit einem Einspritzmodul, einer Strahlpumpe und einem Dosierventil,
- Figur 2: eine schematische Schnittansicht des Förderaggregats mit einer vergrößerten Darstellung des Einspritzmoduls,
- Figur 3: eine Schnittansicht des Einspritzmoduls und des Dosierventils in einer vergrößerten Darstellung
- Figur 4: eine schematische Darstellung einer erfindungsgemäßen Brennstoffzellenanordnung mit einer Brennstoffzelle und dem Förderaggregat,

### Ausführungsformen der Erfindung

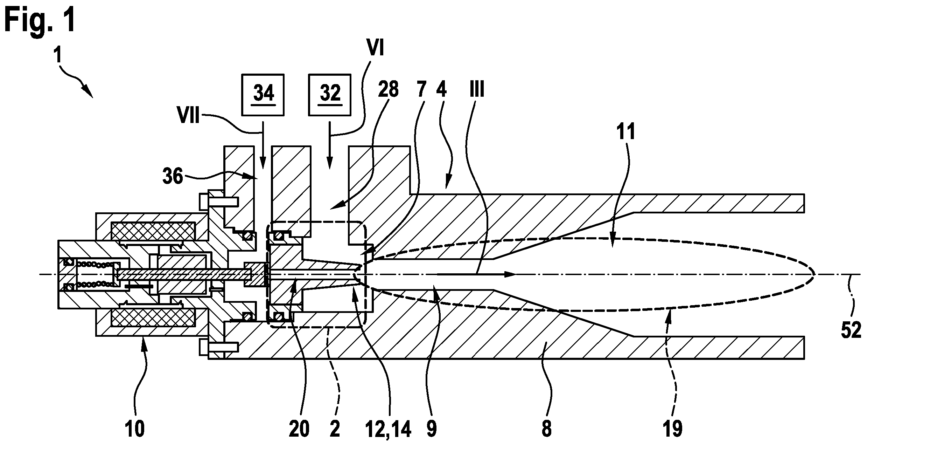

Die Darstellung gemäß **Fig.** 1 zeigt eine schematische Schnittansicht eines Förderaggregats 1 mit einem Einspritzmodul 2, einer Strahlpumpe 4 und einem Dosierventil 10, insbesondere mit einem Grundkörper 8 der Strahlpumpe 4.

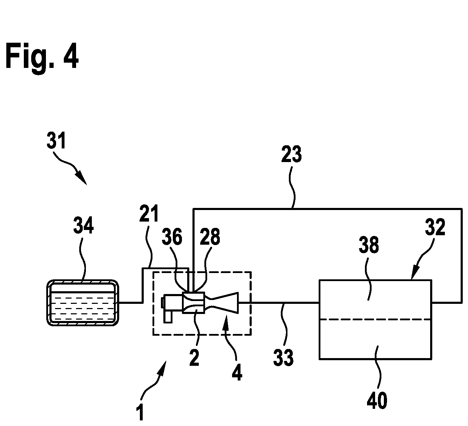

Dabei weist die Strahlpumpe 4 einen ersten Zulauf 28, einen zweiten Zulauf 36, einen Ansaugbereich 7, das Mischrohr 9 und einen Diffusorbereich 11 auf. Das Dosierventil 10 weist dabei den zweiten Zulauf 36 und eine Düse 12, 14 auf. Dabei ist das Dosierventil 10 insbesondere in Richtung einer Längsachse 52 in die Strahlpumpe 4, insbesondere in eine Öffnung in dem Grundkörper 8 der Strahlpumpe 4 eingeschoben. In **Fig.** 1 ist zudem dargestellt, das Förderaggregat 1 von einem zu fördernden Medium in einer Strömungsrichtung III durchströmt wird. Der Großteil der durchströmten Bereiche des Förderaggregat 1 sind dabei zumindest annährend rohrförmig ausgebildet und dienen zum Fördern und/oder Leiten des gasförmigen Mediums, bei dem es sich insbesondere um H₂ mit Anteilen an H₂O und N₂ handelt, in dem Förderaggregat 1. Dabei durchströmt das gasförmige Medium einen zentralen Strömungsbereich 19 im Inneren des Grundkörpers 8 parallel zur Längsachse 52 in der Strömungsrichtung III, wobei der zentrale Strömungsbereich 19 im Bereich der Mündung der Düse 12, 14 im Ansaugbereich 7 beginnt und sich durch das Mischrohr 9 bis in den Diffusorbereich 11 und beispielsweise darüber hinaus erstreckt, insbesondere in einem Bereich mit einem zumindest nahezu gleichbleibenden Durchmesser eines Strömungsquerschnitts des Förderaggregats 1. Dabei wird dem Förderaggregat 1 zum einen ein Rezirkulat durch den ersten Zulauf 28 zugeführt, wobei es sich bei dem Rezirkulat insbesondere um das unverbrauchte H₂ aus einem Anodenbereich 38 (gezeigt in Fig. 4) einer Brennstoffzelle 32, insbesondere einem Stack, handelt, wobei das Rezirkulat auch Wasser und Stickstoff aufweisen kann. Das Rezirkulat strömt dabei auf einem ersten Strömungspfad VI in die Ventil-Strahlpumpenanordnung 3 ein. Zum anderen strömt durch den zweiten Zulauf 36 auf einem zweiten Strömungspfad VII von außerhalb des Förderaggregats 1 ein gasförmiges Treibmedium, insbesondere H₂, in eine Öffnung des Förderaggregats 1 und/oder in den Grundkörper 8 und/oder das Dosierventil 10 ein, wobei das Treibmedium von einem Tank 34 kommen kann und unter hohen Druck, insbesondere von mehr als 5 bar, steht. Dabei verläuft der zweite Zulauf 36, b durch die Bauteile Grundkörper 8 und/oder Dosierventil 10. Vom Dosierventil 10 wird das Treibmedium mittels einer Aktorik und eines vollständig schließbaren Ventilelements, insbesondere stoßweise, durch die Düse 12 in den Ansaugbereich 7 und/oder das Mischrohr 9 abgelassen. Das durch die Düse 12, 14 strömende und als Treibmedium dienende H₂ weist eine Druckdifferenz und/oder Geschwindigkeitsdifferenz zum Rezirkulationsmedium auf, das aus dem ersten Zulauf 28 in das Förderaggregat 1 einströmt, wobei das Treibmedium insbesondere einen höheren Druck von mindestens 5 bar aufweist. Wenn sich ein sogenannter Strahlpumpeneffekt einstellt wird das Rezirkulationsmedium mit einem geringen Druck in den zentralen Strömungsbereich 19 des Förderaggregats 1 gefördert, hohen Geschwindigkeit, die insbesondere nahe der Schallgeschwindigkeit liegen kann, durch die Düse 12, 14 in den zentralen Strömungsbereich 19 des Ansaugbereichs 7 und/oder des Mischrohrs 9 ein. Die Düse 12, 14 weist dabei eine innere Ausnehmung in Form eines Strömungsquerschnitts auf, durch die das gasförmige Medium strömen kann, insbesondere vom Dosierventil 10 kommend und in den Ansaugbereich 7 und/oder das Mischrohr 9 einströmend. Dabei trifft das Treibmedium auf das Rezirkulationsmedium, das sich bereits im zentralen Strömungsbereich 19 des Ansaugbereichs 7 und/oder des Mischrohrs 9 befindet. Aufgrund der hohen Geschwindigkeits- und/oder Druck-Differenz zwischen dem Treibmediums und dem Rezirkulationsmedium wird eine innere Reibung und Turbulenzen zwischen den Medien erzeugt. Dabei entsteht eine Scherspannung in der Grenzschicht zwischen dem schnellen Treibmedium und dem wesentlich langsameren Rezirkulationsmedium. Diese Spannung bewirkt eine Impulsübertragung, wobei das Rezirkulationsmedium beschleunigt und mitgerissen wird. Die Mischung geschieht nach dem Prinzip der Impulserhaltung. Dabei wird das Rezirkulationsmedium in der Strömungsrichtung III beschleunigt und es entsteht für das Rezirkulationsmedium ein Druckabfall, wodurch eine Saugwirkung einsetzt und somit weiteres Rezirkulationsmedium aus dem Bereich des ersten Zulaufs 28 nachgefördert wird. Dieser Effekt kann als Strahlpumpeneffekt bezeichnet werden. Durch das Ansteuern der Zu-Dosierung des Treibmediums mittels des Dosierventils 10 kann eine Förderrate des Rezirkulationsmediums reguliert werden und auf den jeweiligen Bedarf eines gesamten Brennstoffzellen-Systems 31 (gezeigt in Fig. 4) je nach Betriebszustand und Betriebsanforderungen angepasst werden. Nach dem Passieren des Mischrohrs 9 strömt das vermischte und zu fördernde Medium, das insbesondere aus dem Rezirkulationsmedium und dem Treibmedium besteht, in der Strömungsrichtung III in den Diffusorbereich 11, wobei es im Diffusorbereich 11 zu einer Reduzierung der Strömungsgeschwindigkeit kommen kann. Von dort strömt das Medium beispielsweise weiter in den Anodenbereich 38 der Brennstoffzelle 32.

Weiterhin weist das Förderaggregat 1 aus der **Fig.** 1 technische Merkmale auf, die den Strahlpumpeneffekt und die Fördereffizienz zusätzlich verbessern und/oder den Kaltstartvorgang und/oder Fertigungs- und Montage-Kosten weiter verbessern. Dabei verläuft das Teilstück Diffusorbereich 11 im Bereich seines inneren Strömungsquerschnitts konisch, insbesondere sich in der Strömungsrichtung III vergrößernd. Durch diese Ausformung des Teilstücks Diffusorbereich 11 kann der vorteilhafte Effekt erzeugt werden, dass die kinetische Energie in Druckenergie umgewandelt wird, wodurch das mögliche Fördervolumen des Förderaggregats 1 weiter erhöht werden kann, wodurch mehr des zu fördernden Mediums, insbesondere H₂, der Brennstoffzelle 32 zugeführt werden kann, wodurch der Wirkungsgrad des gesamten Brennstoffzellen-Systems 31 erhöht werden kann.

Erfindungsgemäß kann das Dosierventil 10 als ein Proportionalventil 10 ausgeführt sein, um eine verbesserte Dosierfunktion und ein exakteres Dosieren des Treibmediums in den Ansaugbereich 7 und/oder das Mischrohr 9 zu ermöglichen. Zur weiteren Verbesserung der Strömungsgeometrie und des Wirkungsgrads des Förderaggregats 1 sind die Düse 12, 14 und das Mischrohr 9 rotationssymetrisch ausgeführt, wobei die Düse 12,14 koaxial zum Mischrohr 9 der Strahlpumpe 4 verläuft und mindestens eine innere Strömungsöffnung 20 aufweisen kann.

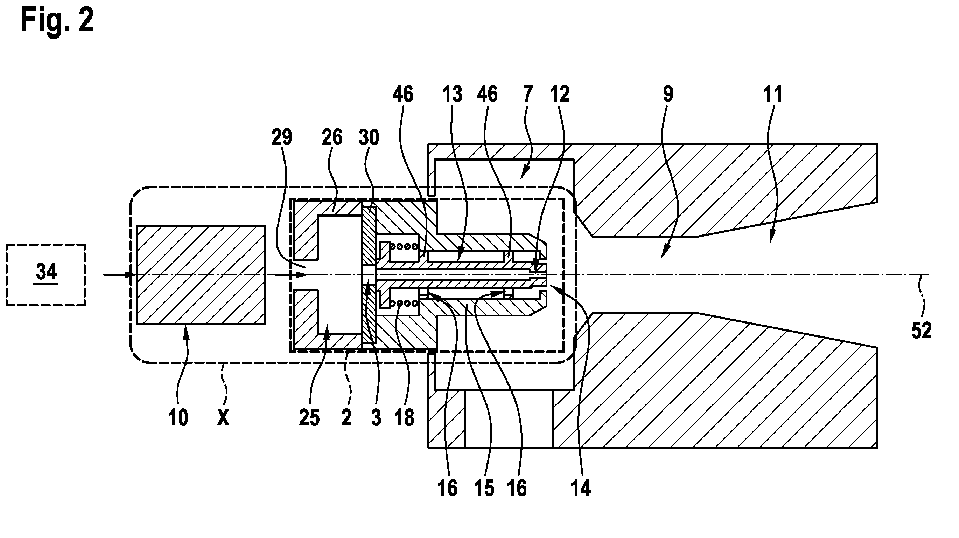

**Fig.** 2 zeigt eine schematische Schnittansicht des Förderaggregats 1 mit einer vergrößerten Darstellung des Einspritzmodul 2. Das Einspritzmodul 2 ist dabei geeignet für das Förderaggregat 1 des Brennstoffzellen-System 31 zur Förderung und/oder Rezirkulation eines gasförmigen Mediums, insbesondere Wasserstoff. Dabei weist das Einspritzmodul 2 eine Verbindungsöffnung 29 und/oder eine Einlassöffnung 3 auf, mittels derer das gasförmigen Medium in das Einspritzmodul 2 einströmt, wobei das Einspritzmodul 2 einen kleinen Düsenkörper 13 mit einer ersten Treibdüse 12 und einen großen Düsenkörper 15 mit einer zweiten Treibdüse 14 aufweist, mittels derer 12, 14 das gasförmige Medium aus dem Einspritzmodul 2 ausströmt. Dabei ist der kleine Düsenkörper 13 in Richtung der Längsachse 52 beweglich im großen Düsenkörper 15 und/oder im Einspritzmodul 2 angeordnet.

Des Weiteren ist gezeigt, dass das Einspritzmodul 2 ein Federelement 18 aufweist, wobei sich das Federelement 18 insbesondere in Richtung der Längsachse 52 zwischen dem großen Düsenkörper 15 und dem kleinen Düsenkörper 13 befindet, und wobei das Federelement 18 den kleinen Düsenkörper 13 durch eine Federkraft gegen eine Anschlagscheibe 30 und/oder mittelbar gegen den großen Düsenkörper 15 drückt.

Zudem ist in **Fig.** 2 gezeigt, dass der kleine Düsenkörper 13 an seiner der Längsachse 52 abgewandten Oberfläche mindestens ein scheibenförmiges Führungselement 46 aufweist, mittels dessen der kleine Düsenkörper 13 im großen Düsenkörper 15 geführt ist, insbesondere orthogonal zur Längsachse 52. Dabei kann das mindestens eine scheibenförmige Führungselement 46 mindestens eine Strömungsöffnung 16, die beispielsweise als Bohrung 16 ausgeführt ist, aufweisen, die zumindest nahezu parallel zur Längsachse 52 durch das Führungselement 46 verläuft. In der in **Fig.** 2 gezeigten beispielhaften Ausführungsform des Einspritzmoduls 2 weist der kleine Düsenkörper 13 zwei scheibenförmige Führungselemente 46 auf.

Weiterhin ist in **Fig.** 2 gezeigt, dass das als Treibmedium dienende gasförmige Medium von dem Tank 34, in dem es unter Hochdruck steht, beispielsweise zumindest nahezu 700 bar, zum Dosierventil 10 strömt.

**Fig.** 2 zeigt, dass das Einspritzmodul 2 in den Grundkörper 8 des Förderaggregats 1 eingeschoben ist, insbesondere in Richtung der Längsachse 52. Dabei steht das Einspritzmodul 2 beispielsweise mit dem großen Düsenkörper 15 mit dem Grundkörper 8 in Anlage, insbesondere orthogonal zur Drehachse 52. Der große Düsenkörper 15 weist auf der dem Dosierventil 10 zugewandten Seite die Verbindungsöffnung 29 auf, mittels derer das unter Druck stehende gasförmige Medium in einen Zwischenraum 25 im großen Düsenkörper 15 einströmt. Auf seiner dem Dosierventil 10 zugewandten Seite wird der Zwischenraum 25 des großen Düsenkörpers 15 von einen Gehäuseboden 26 zumindest teilweise begrenzt, der wiederum die Verbindungsöffnung 29 aufweist. Auf seiner dem Dosierventil 10 abgewandten Seite kann der Zwischenraum 25 von der Anschlagscheibe 30 zumindest teilweise begrenzt werden, wobei die Anschlagscheibe 30 der wiederum die Verbindungsöffnung 29 aufweist. Auf seiner dem Dosierventil 10 abgewandten Seite weist der große Düsenkörper 15 die zweite Treibdüse 14 auf, wobei die zweite Treibdüse 14 in den Ansaugbereich 7 und/oder das Mischrohr 9 des Grundkörpers 8 hineinragt.

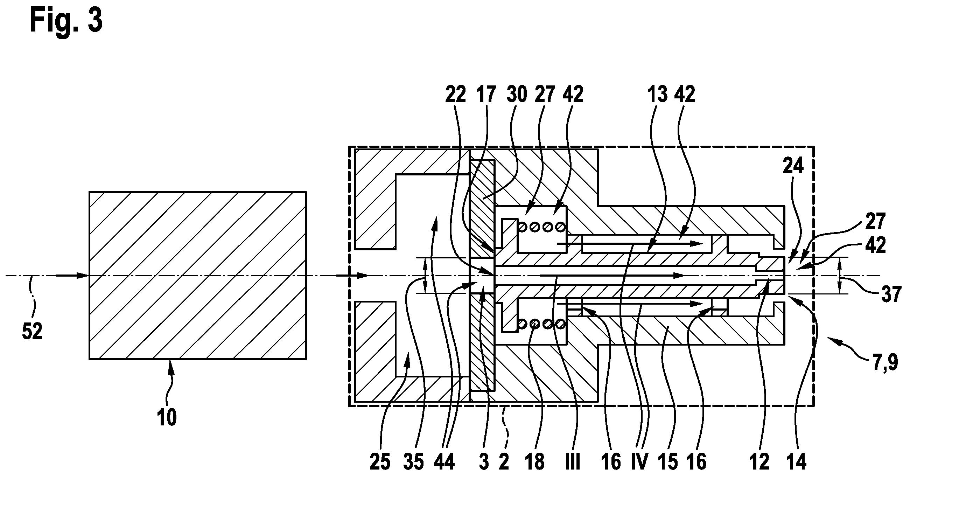

In **Fig.** 3 ist eine Schnittansicht des Einspritzmoduls 2 und des Dosierventils 10 in einer vergrößerten Darstellung. Dabei wird dem Einspritzmoduls 2 mittels des Dosierventils 10 das gasförmige Medium zu dosiert, insbesondere in den Zwischenraum 25. Das Einspritzmodul 2 besteht dabei aus den Bauteilen großer Düsenkörper 15, kleiner Düsenkörper 13, Federelement 18 und der optionalen Anschlagscheibe 30. Die Bauteile sind dabei rotationssymetrisch um die Längsachse 52 angeordnet. Das Federelement 18 stützt sich in Richtung der Längsachse 52 an einer scheibenförmigen Anformung des kleinen Düsenkörpers 13 und dem großen Düsenkörper 15 derart ab, dass es den kleinen Düsenkörper 13 und/oder das Einspritzmodul 2 und/oder das Zuschaltventil in eine geschlossene Position drückt. In dieser geschlossenen Position bildet der kleine Düsenkörper 13 mit seiner dem Zwischenraum 25 zugewandten Stirnfläche einen Ventilsitz 17 mit dem großen Düsenkörper 15 und/oder der Zwischen- scheibe 30 aus.

In **Fig.** 2 ist darüber hinaus gezeigt, dass das Einspritzmodul 2 und/oder der kleine Düsenkörper 13 und/oder der große Düsenkörpers 15 jeweils einen ersten und/oder zweiten Gasflusspfad III, IV aufweisen, wobei das gasförmige Medium entweder nur durch den ersten Gasflusspfad III oder durch den ersten Gasflusspfad III und den zweiten Gasflusspfad IV gleichzeitig strömen kann. Der zweite Gasflusspfad IV mittels einer Bewegung des kleinen Düsenkörpers 13 öffenbar oder schließbar ist. In einer Grundposition steht der kleine Düsenkörper 13 mit dem großen Düsenkörper 15 oder der Anschlagscheibe 30 zumindest mittelbar in Anlage und somit eine öffnende Druckfläche 22 ausbildet. Dabei sind die öffnende Druckfläche 22 und eine schließende Druckfläche 24 zumindest nahezu gleich groß sind, wobei die schließende Druckfläche 24 mit einem abströmseitigen Strahlpumpendruck 42 beaufschlagbar und die öffnende Druckfläche 22 mit einem zuströmseitiger Staudruck 44 beaufschlagbar ist. Durch ein Verschieben des kleinen Düsenkörpers 13 im großen Düsenkörper 15 in Richtung der Längsachse 52 kann die Anordnung der ersten Treibdüse 12 zur zweiten Treibdüse 14 derart geändert werden, so dass sich die geometrische Ausformung und/oder Kontur des Treibstrahls im Bereich der ersten und zweiten Treibdüse 12, 14, insbesondere in Richtung der Längsachse 52, des gasförmigen Mediums beim Eintritt in den Ansaugbereich 7 und/oder das Mischrohr 9 ändern lässt. Aufgrund der erfindungsgemäßen Ausgestaltung des Einspritzmoduls 2 sind die Druckflächen 22, 24 nahezu gleich groß ausgebildet, so dass keine resultierende Druckfläche in zumindest einem der Druckbereiche im Druckraum 27 besteht. Dies wird dadurch erreicht, dass ein Durchmesser 35 des Ventilsitzes 17 einem AußenDurchmesser 37 des kleinen Düsenkörpers 13 am Austritt der ersten Treibdüse 12 im Ansaugbereich 7 oder im Bereich des Mischrohrs 9 entspricht. Der kleine Düsenkörper 13 wird daher nicht vom Staudruck 42 in einem Druckraum beeinflusst und weist ein stabiles Öffnungsverhalten auf.

Mittels der Einlassöffnung 3 kann das gasförmige Medium vom Zwischenraum 25, in dem der Staudruck 44 vorliegt, durch die Einlassöffnung 3 zur öffnenden Druckfläche 22 strömen. Von dort strömt das gasförmige Medium entweder bei geschlossenem Zuschaltventil, bei dem der kleine Düsenkörper 13 mit der Anschlagscheibe 30 oder dem großen Düsenkörper 15 in Richtung der Längsachse 52 in Anlage steht und den Ventilsitz 17 ausbildet, nur durch den ersten Gasflusspfad III und von dort durch die erste Treibdüse 12. Dabei steigt der Staudruck 44 im Zwischenraum 25 bei einem geöffneten Dosierventil 10 kontinuirlich an, während insbesondere der Strahlpumpendruck 42 stromabwärts des Zwischenraums 25 im Bereich des Druckraums 27 zumindest nahezu gleich bleibt, bis ein Schaltdruckniveau erreicht wird, bei dem die auf die öffnende Druckfläche 22 ausgeübte Druckkraft die Federkraft übersteigt und den kleinen Düsenkörper 13 in Richtung der Längsachse 52 derart wegbewegt, dass der Ventilssitz 17 aufgehoben wird und sich ein zweiter Gasflusspfad IV öffnet.

Dabei strömt von das gasförmige Medium bei geöffnetem Zuschaltventil, bei dem sich der kleine Düsenkörper 13 von der Anschlagscheibe 30 oder dem großen Düsenkörper 15 in Richtung der Längsachse 52 wegbewegt hat und somit zweiten Gasflusspfad IV freigibt, durch den ersten Gasflusspfad III und den zweiten Gasflusspfad IV. Dabei mündet der erste Gasflusspfad III in die erste Treibdüse 12 und der zweite Gasflusspfad IV in die erste Treibdüse 12. Der erste Gas-flusspfad III verläuft dabei durch eine entlang der Längsachse 52 verlaufenden Bohrung im inneren des kleinen Düsenkörpers 13. Der zweite Gasflusspfad IV verläuft durch den in Richtung der Längsachse 52 verlaufenden ringförmigen Druckraum 27 zwischen dem kleinen Düsenkörper 13 und dem großen Düsenkörper 15, wobei der Druckraum 27 einen gestuften Verlauf aufweisen kann.

Weiterhin ist in **Fig.** 3 gezeigt, dass die Summe der abströmseitigen resultierenden Druckflächen und der resultierenden zuströmseitigen Druckflächen des kleinen Düsenkörper 13, ausgenommen die schließende Druckfläche 24 und die öffnende Druckfläche 22, zumindest nahezu gleich groß sind. Des Weiteren ist der kleine Düsenkörper 13 in Richtung der Längsachse 52 zumindest nahezu zylindrisch ausgeführt, wobei der kleine Düsenkörper 13 zumindest nahezu ausschließlich parallel oder zumindest nahezu orthogonal zur Längsachse 52 verlaufende Flächen aufweist, und somit keine schrägen Flächen, auf denen sich ein Druckniveau aufgrund des Strahlpumpendrucks 42 und/oder Staudrucks 44. Aufgrund dieser erfinderischen Ausgestaltungen des Einspritzmoduls 2 wird somit verhindert, dass es aufgrund dieser Stirnflächen, ausgenommen der Druckflächen 22, 24, eine unvorhergesehene Bewegung des kleinen Düsenkörper 13 bei Druckschwankungen des Strahlpumpendrucks 42 oder des Staudrucks 44 führt. Das scheibenförmige Führungselement 46 weist mindestens eine zumindest nahezu parallel zur Längsachse 52 verlaufende Bohrung auf, so dass das gasförmige Medium in Richtung des zweiten Gasflusspfades IV strömen kann.

Bei dem in **Fig.** 3 gezeigten Federelement 18, dass die Federkraft des Federelements 18, insbesondere bei einer Bewegung des kleinen Düsenkörpers 13 nicht linear über den Weg bei einem Komprimieren oder Dekomprimieren des Federelements 18 verläuft, sondern dass das Federelement 18 eine über den Federweg progressiv veränderliche Federkonstante aufweist. Dabei wird die progressiv veränderliche Federkonstante des Federelements 18, dadurch erzielt wird, dass der Windungsdurchmesser der Schließfeder 18 veränderlich ist und/oder dass die Schließfeder 18 aus mindestens zwei Federsegmenten aufgebaut ist, wobei die Federsegmente unterschiedliche Federkonstanten aufweisen.

In **Fig.** 4 ist eine beispielhafte Ausführungsform des Brennstoffzellen-Systems 31 dargestellt, insbesondere eines Anodenkreislaufs. Dabei ist gezeigt, dass das Förderaggregat 1 über eine Verbindungsleitung 33 mit der Brennstoffzelle 32 verbunden ist, die den Anodenbereich 38 und einen Kathodenbereich 40 umfasst. Zudem ist eine Rückführleitung 23 vorgesehen, die den Anodenbereich 38 der Brennstoffzelle 32 mit dem ersten Zulauf 28, und somit insbesondere mit dem Ansaugbereich 7, des Förderaggregats 1 verbindet. Mittels der Rückführleitung 23 kann das im Anodenbereich 38 beim Betrieb der Brennstoffzelle 32 nicht verwertete erste gasförmige Medium zum ersten Zulauf 28 zurückgeführt werden. Bei diesem ersten gasförmigen Medium handelt es sich insbesondere um das vorrangegangen beschriebene Rezirkulationsmedium.

Wie aus **Fig.** 4 weiter ersichtlich, wird das in dem Tank 34 gespeicherte zweite gasförmige Medium über eine Zuströmleitung 21 einem Zuströmbereich, der insbesondere als der zweite Zulauf 36 ausgebildet ist, des Förderaggregats 1 und/oder der Strahlpumpe 4 zugeführt. Bei diesem zweiten gasförmigen Medium handelt es sich insbesondere um das Treibmedium.

## Patentansprüche

1. Einspritzmodul (2) für ein Förderaggregat (1) eines Brennstoffzellen-System (31) zur Förderung und/oder Rezirkulation eines gasförmigen Mediums, insbesondere Wasserstoff, wobei das Einspritzmodul (2) eine Verbindungsöffnung (29) und/oder eine Einlassöffnung (3) aufweist, mittels derer das gasförmigen Medium in das Einspritzmodul (2) einströmt, wobei das Einspritzmodul (2) einen kleinen Düsenkörper (13) mit einer ersten Treibdüse (12) und einen großen Düsenkörper (15) mit einer zweiten Treibdüse (14) aufweist, mittels derer (12, 14) das gasförmige Medium aus dem Einspritzmodul (2) ausströmt, wobei der kleine Düsenkörper (13) in Richtung einer Längsachse (52) beweglich im großen Düsenkörper (15) und/oder im Einspritzmodul (2) angeordnet ist und wobei der kleine Düsenkörper (13) und der große Düsenkörpers (15) jeweils einen Gasflusspfad (III, IV) aufweisen, wobei das gasförmige Medium entweder nur durch den ersten Gasflusspfad III oder durch den ersten Gasflusspfad III und den zweiten Gasflusspfad IV gleichzeitig strömen kann, wobei der zweite Gasflusspfad IV mittels einer Bewegung des kleinen Düsenkörpers (13) öffenbar oder schließbar ist, **dadurch gekennzeichnet, dass** der kleine Düsenkörper (13) mit einer Anschlagscheibe (30) und/oder zumindest mittelbar mit dem großen Düsenkörper (15), in Anlage steht und somit eine öffnende Druckfläche (22) ausbildet, wobei die öffnende Druckfläche (22) und eine, insbesondere abströmseitig am kleinen Düsenkörpers befindliche, schließende Druckfläche (24) gleich groß sind, wobei die öffnende Druckfläche (22) mit einem zuströmseitiger Staudruck (44) beaufschlagbar ist.

2. Einspritzmodul (2) nach Anspruch 1, **dadurch gekennzeichnet, dass** der kleine Düsenkörper (13) in Richtung der Längsachse (52) zumindest nahezu zylindrisch ausgeführt ist, wobei der kleine Düsenkörper (13) zumindest nahezu ausschließlich parallel oder zumindest nahezu orthogonal zur Längsachse (52) verlaufende Flächen aufweist.

3. Einspritzmodul (2) nach Anspruch 2, **dadurch gekennzeichnet, dass** die Summe der abströmseitigen Stirnflächen und zuströmseitigen Stirnflächen des kleinen Düsenkörpers (13), ausgenommen die schließende Druckfläche (24) und die öffnende Druckfläche (22), zumindest nahezu gleich groß sind.

4. Einspritzmodul (2) nach Anspruch 1, **dadurch gekennzeichnet, dass** der kleine Düsenkörper (13) an seiner der Längsachse (52) abgewandten Oberfläche mindestens ein scheibenförmiges Führungselement (46) aufweist, mittels dessen der kleine Düsenkörper (13) im großen Düsenkörper (15) geführt ist, insbesondere orthogonal zur Längsachse (52).

5. Einspritzmodul (2) nach einem der vorrangegangen Ansprüche, **dadurch gekennzeichnet, dass** das Einspritzmodul (2) ein Federelement (18) aufweist, wobei sich das Federelement (18) insbesondere in Richtung der Längsachse (52) zwischen dem großen Düsenkörper (15) und dem kleinen Düsenkörper (13) befindet, und wobei das Federelement (18) den kleinen Düsenkörper (13) durch eine Federkraft gegen die Anschlagscheibe (30) und/oder mittelbar gegen den großen Düsenkörper (15) drückt.

6. Einspritzmodul (2) nach Anspruch 5, **dadurch gekennzeichnet, dass** der Staudruck (44) im Zwischenraum (25) bei einem geöffneten Dosierventil (10) kontinuirlich ansteigt, während insbesondere der Strahlpumpendruck (42) stromabwärts des Zwischenraums (25) zumindest nahezu gleich bleibt, bis ein Schaltdruckniveau erreicht wird, bei dem die auf die öffnende Druckfläche (22) ausgeübte Druckkraft die Federkraft übersteigt und den kleinen Düsenkörper (13) in Richtung der Längsachse (52) derart wegbewegt, dass der Ventilssitz (17) aufgehoben wird und sich ein zweiter Gasflusspfad IV öffnet.

7. Einspritzmodul (2) nach Anspruch 5, **dadurch gekennzeichnet, dass** die Federkraft des Federelements (18), insbesondere bei einer Bewegung des kleinen Düsenkörpers (13) nicht linear über den Weg bei einem Komprimieren oder Dekomprimieren des Federelements (18) verläuft, sondern dass das Federelement (18) eine über den Federweg progressiv veränderliche Federkonstante aufweist.

8. Einspritzmodul (2) nach Anspruch 6, **dadurch gekennzeichnet, dass** die progressiv veränderliche Federkonstante des Federelements (18), dadurch erzielt wird, dass der Windungsdurchmesser der Schließfeder (18) veränderlich ist und/oder dass die Schließfeder (18) aus mindestens zwei Federsegmenten aufgebaut ist, wobei die Federsegmente unterschiedliche Federkonstanten aufweisen.

## Claims

1. Injection module (2) for a conveying unit (1) of a fuel cell system (31) for conveying and/or recirculating a gaseous medium, in particular hydrogen, wherein the injection module (2) has a connecting opening (29) and/or an inlet opening (3), by means of which the gaseous medium flows into the injection module (2), wherein the injection module (2) has a small nozzle body (13) with a first drive nozzle (12) and a large nozzle body (15) with a second drive nozzle (14), by means of which (12, 14) the gaseous medium flows out of the injection module (2), wherein the small nozzle body (13) is arranged in the large nozzle body (15) and/or in the injection module (2) movably in the direction of a longitudinal axis (52), and wherein the small nozzle body (13) and the large nozzle body (15) each have a gas flow path (III, IV), wherein the gaseous medium can flow either only through the first gas flow path III or through the first gas flow path III and the second gas flow path IV simultaneously, wherein the second gas flow path IV can be opened or closed by means of a movement of the small nozzle body (13), **characterized in that** the small nozzle body (13) is in contact with a stop washer (30) and/or at least indirectly with the large nozzle body (15) and thus forms an opening pressure surface (22), wherein the opening pressure surface (22) and a closing pressure surface (24), in particular located on the outflow side of the small nozzle body, are of the same size, wherein the opening pressure surface (22) can be loaded with an inflow-side back pressure (44).

2. Injection module (2) according to Claim 1, **characterized in that** the small nozzle body (13) is of at least almost cylindrical configuration in the direction of the longitudinal axis (52), wherein the small nozzle body (13) has surfaces which run at least almost exclusively parallel or at least almost orthogonally with respect to the longitudinal axis (52).

3. Injection module (2) according to Claim 2, **characterized in that** the sum of the outflow-side end surfaces and inflow-side end surfaces of the small nozzle body (13), except for the closing pressure surface (24) and the opening pressure surface (22), are at least nearly the same size.

4. Injection module (2) according to Claim 1, **characterized in that** the small nozzle body (13) has, on its surface facing away from the longitudinal axis (52), at least one disc-shaped guide element (46), by means of which the small nozzle body (13) is guided in the large nozzle body (15), in particular orthogonally with respect to the longitudinal axis (52).

5. Injection module (2) according to one of the preceding claims, **characterized in that** the injection module (2) has a spring element (18), wherein the spring element (18) is located, in particular, in the direction of the longitudinal axis (52) between the large nozzle body (15) and the small nozzle body (13), and wherein the spring element (18) presses the small nozzle body (13) against the stop washer (30) and/or indirectly against the large nozzle body (15) by means of a spring force.

6. Injection module (2) according to Claim 5, **characterized in that** the back pressure (44) in the intermediate space (25) increases continuously with an open metering valve (10), while, in particular, the jet pump pressure (42) downstream of the intermediate space (25) remains at least nearly the same until a switching pressure level is reached, at which the pressure force exerted on the opening pressure surface (22) exceeds the spring force and moves the small nozzle body (13) away in the direction of the longitudinal axis (52) in such a way that the valve seat (17) is lifted and a second gas flow path IV opens.

7. Injection module (2) according to Claim 5, **characterized in that** the spring force of the spring element (18), in particular in the case of a movement of the small nozzle body (13), does not run in a linear manner over the travel during a compression or decompression of the spring element (18), but **in that** the spring element (18) has a spring constant which is progressively variable over the spring travel.

8. Injection module (2) according to Claim 6, **characterized in that** the progressively variable spring constant of the spring element (18)
is achieved by virtue of the fact that the winding diameter of the closing spring (18) is variable, and/or that the closing spring (18) is constructed from at least two spring segments, wherein the spring segments have different spring constants.

## Revendications

1. Module d'injection (2) pour un groupe de transport (1) d'un système de pile à combustible (31) pour le transport et/ou la recirculation d'un milieu gazeux, notamment d'hydrogène, le module d'injection (2) présentant une ouverture de liaison (29) et/ou une ouverture d'entrée (3), au moyen desquelles le milieu gazeux s'écoule dans le module d'injection (2), le module d'injection (2) présentant un petit corps de buse (13) avec une première buse de propulsion (12) et un grand corps de buse (15) avec une deuxième buse de propulsion (14), au moyen desquelles (12, 14) le milieu gazeux s'écoule hors du module d'injection (2), le petit corps de buse (13) étant agencé de manière mobile dans la direction d'un axe longitudinal (52) dans le grand corps de buse (15) et/ou dans le module d'injection (2) et le petit corps de buse (13) et le grand corps de buse (15) présentant chacun un chemin d'écoulement de gaz (III, IV), le milieu gazeux pouvant s'écouler soit uniquement par le premier chemin d'écoulement de gaz III, soit simultanément par le premier chemin d'écoulement de gaz III et le deuxième chemin d'écoulement de gaz IV, le deuxième chemin d'écoulement de gaz IV pouvant être ouvert ou fermé au moyen d'un mouvement du petit corps de buse (13), **caractérisé en ce que** le petit corps de buse (13) repose contre un disque de butée (30) et/ou au moins indirectement contre le grand corps de buse (15), et réalise ainsi une surface de pression d'ouverture (22), la surface de pression d'ouverture (22) et une surface de pression de fermeture (24) qui se trouve notamment côté aval sur le petit corps de buse étant de même taille, la surface de pression d'ouverture (22) pouvant être sollicitée avec une pression dynamique (44) côté amont.

2. Module d'injection (2) selon la revendication 1, **caractérisé en ce que** le petit corps de buse (13) est conçu au moins presque cylindrique dans la direction de l'axe longitudinal (52), le petit corps de buse (13) présentant des surfaces qui s'étendent au moins presque exclusivement parallèlement ou au moins presque orthogonalement à l'axe longitudinal (52).

3. Module d'injection (2) selon la revendication 2, **caractérisé en ce que** la somme des surfaces frontales côté aval et des surfaces frontales côté amont du petit corps de buse (13), à l'exception de la surface de pression de fermeture (24) et de la surface de pression d'ouverture (22), sont au moins presque égales.

4. Module d'injection (2) selon la revendication 1, **caractérisé en ce que** le petit corps de buse (13) présente sur sa surface détournée de l'axe longitudinal (52) au moins un élément de guidage (46) en forme de disque, au moyen duquel le petit corps de buse (13) est guidé dans le grand corps de buse (15), notamment orthogonalement à l'axe longitudinal (52).

5. Module d'injection (2) selon l'une quelconque des revendications précédentes, **caractérisé en ce que** le module d'injection (2) présente un élément de ressort (18), l'élément de ressort (18) se trouvant notamment dans la direction de l'axe longitudinal (52) entre le grand corps de buse (15) et le petit corps de buse (13), et l'élément de ressort (18) pressant le petit corps de buse (13) par une force élastique contre le disque de butée (30) et/ou indirectement contre le grand corps de buse (15).

6. Module d'injection (2) selon la revendication 5, **caractérisé en ce que** la pression dynamique (44) dans l'espace intermédiaire (25) augmente de manière continue lorsqu'une soupape de dosage (10) est ouverte, tandis que notamment la pression de la pompe à jet (42) en aval de l'espace intermédiaire (25) reste au moins presque identique, jusqu'à ce qu'un niveau de pression de commutation soit atteint, auquel la force de pression exercée sur la surface de pression d'ouverture (22) dépasse la force de ressort et éloigne le petit corps de buse (13) dans la direction de l'axe longitudinal (52) de telle sorte que le siège de soupape (17) est levé et qu'un deuxième chemin d'écoulement de gaz IV s'ouvre.

7. Module d'injection (2) selon la revendication 5, **caractérisé en ce que** la force de ressort de l'élément de ressort (18), notamment lors d'un mouvement du petit corps de buse (13), n'évolue pas linéairement sur la course lors d'une compression ou d'une décompression de l'élément de ressort (18), mais **en ce que** l'élément de ressort (18) présente une constante de ressort variant progressivement sur la course du ressort.

8. Module d'injection (2) selon la revendication 6, **caractérisé en ce que** la constante de ressort variant progressivement de l'élément de ressort (18)
est obtenue **en ce que** le diamètre des spires du ressort de fermeture (18) est variable et/ou **en ce que** le ressort de fermeture (18) est formé d'au moins deux segments de ressort, les segments de ressort présentant des constantes de ressort différentes.
